# EUROPÄISCHE PATENTANMELDUNG

(11) **EP 1 043 684 A1**
(43) Veröffentlichungstag der Anmeldung: **11.10.2000**
(21) Anmeldenummer: 99106359.5
(22) Anmeldetag: 29.03.1999
(51) Int. Cl.: G06K 19/06, G06K 19/08

(54) **Informationsträger**

(71) Anmelder: OMD Productions AG, 8253 Diessenhofen (CH)
(72) Erfinder: Rütsche, Mario, 8267 Berlingen (CH)
(74) Vertreter: Blum, Rudolf Emil Ernst

(57) **Zusammenfassung**

Der Informationsträger besitzt einen Kunststoffkörper (1), in welchem eine Metallschicht angeordnet ist, die Daten im CD- oder DVD-Format trägt. Ferner weist der Informationsträger einen Halbleiterbaustein (7) auf, der im Kunststoffkörper (1) eingegossen ist und Kontakte (8) oder eine Antenne aufweist, um mit einem externen Gerät zu kommunizieren. Um die vom Halbleiterbaustein (7) erzeugte Unwucht zu kompensieren, ist ein Gegengewicht (9) vorgesehen und/oder ein Massenausgleich in Form einer Verschiebung des Mittellochs (3) bzw. in Form einer asymmetrischen Formgebung. Durch die Kombination eines Speichermediums in CD- oder DVD-Format mit einem Halbleiterbaustein lassen sich die Einsatzmöglichkeiten des Informationsträgers erweitern, z.B. kann der Halbleiterbaustein verwendet werden, um eine Zugriffsberechtigung auf die abgespeicherten Daten zu prüfen.

## Beschreibung

Die Erfindung betrifft einen Informationsträger sowie ein Verfahren zur Herstellung und eine Verwendung eines solchen Informationsträgers gemäss Oberbegriff der unabhängigen Ansprüche.

Datenträger in der Form von CDs bzw. CD-ROMs oder im DVD-Format sind allgemein bekannt. Es wurde auch schon vorgeschlagen, derartige Datenträger z.B. als Visitenkarten zu verwenden, indem man ihnen eine quadratische Form gibt und sie so ausgestaltet, dass sie in einem Lesegerät zentriert werden können.

Vor dem Hintergrund des Erfolgs dieser Datenträger stellt sich die Aufgabe, diese so auszugestalten, dass sie möglichst allgemein einsetzbar sind.

Diese Aufgabe wird vom Informationsträger gemäss Anspruch 1 erfüllt.

Erfindungsgemäss ist im Kunststoffkörper des Informationsträgers also ein Halbleiterbaustein angeordnet, der mit einem externen Gerät in Verbindung treten kann. Dies erlaubt es, den Informationsträger z.B. als "Chipkarte" auszugestalten, die in einem Kartenleser ausgelesen werden kann.

Vorzugsweise ist die Karte mit einem Ausgleichsmittel versehen, um eine durch den Halbleiterbaustein erzeugte Unwucht auszugleichen, so dass die Karte auch in CD- bzw. DVD-Lesegeräten mit hoher Drehzahl problemlos gelesen werden kann. Als derartiges Ausgleichsmittel eignet sich insbesondere ein dem Halbleiterbaustein gegenüberliegendes Gegengewicht. Es ist auch möglich, den Kunststoffkörper asymmetrisch auszugestalten, so dass er auf der Seite des Halbleiterbausteins weniger schwer ist.

Vorzugsweise wird der Informationsträger rechteckig ausgestaltet und der Halbleiterbaustein in einem Eckbereich angeordnet, so dass er die lesbare Fläche möglichst wenig beeinträchtigt.

Um den Halbleiterbaustein mit einem externen Gerät zu verbinden, können geeignete Kontaktflächen vorgesehen werden. Es ist auch denkbar, im Informationsträger eine Antenne anzuordnen. Vorzugsweise wird die Antenne durch eine Bahn bzw. Bahnen der gleichen Metallschicht gebildet, die auch die DVD- bzw. CD-Daten trägt. Die Antenne verläuft möglichst in einem Randbereich des Kunststoffkörpers, so dass sie eine grosse Fläche umschliesst, was den Empfang schwacher Signale erleichtert.

In einem bevorzugten Verfahren wird der Informationsträger so hergestellt, dass die Matrix, welche die für die Metallschicht bestimmten Informationen als Relief trägt, gleichzeitig auch eine Erhöhung aufweist, welche eine Vertiefung im Kunststoffkörper erzeugt, in die der Halbleiterbaustein eingesetzt werden kann.

Der erfindungsgemässe Informationsträger kann z.B. als Ausweis, Kreditkarte, Visitenkarte oder Fahrschein eingesetzt werden. Er kann auch als Datenträger für Film- oder Videodaten oder für Computerprogramme dienen.

Insbesondere kann der Informationsträger auch verwendet werden, um geschützte Informationen abzuspeichern. Dabei wird aufgrund der Daten im Halbleiterbaustein ermittelt, ob der Leser eine Zugriffsberechtigung für die Daten besitzt. Hierzu kann im Halbleiterbaustein z.B. ein Leseschlüssel und/oder ein Kreditzähler vorgesehen sein.

Weitere bevorzugte Ausführungen und Anwendungen ergeben sich aus den abhängigen Ansprüchen sowie aus der nun folgenden Beschreibung anhand der Figuren. Dabei zeigen:
Fig. 1 eine Draufsicht auf eine erste Ausführung des erfindungsgemässen Informationsträgers,
Fig. 2 einen Schnitt durch den Informationsträger nach Fig. 1 entlang Linie II-II,
Fig. 3 eine Ansicht des Informationsträgers nach Fig. 1 von unten,
Fig. 4 ein vergrösserter Teil von Fig. 2,
Fig. 5 eine Matrize bzw. Gussform zur Herstellung des Informationsträgers,
Fig. 6 einen Schnitt entlang Linie VI-VI durch die Matrize bzw. Gussform gemäss Fig. 5 und
Fig. 7 eine zweite Ausführung des erfindungsgemässen Informationsträgers mit einer Antenne,
Fig. 8 eine dritte Ausführung des erfindungsgemässen Informationsträgers,
Fig. 9 eine vierte Ausführung des erfindungsgemässen Informationsträgers,
Fig. 10 einen Schnitt entlang Linie X-X von Fig. 9,
Fig. 11 ein Lesegerät für verschlüsselte Daten,
Fig. 12 eine mögliche Ausgestaltung des Halbleiterbausteins bei Verwendung als Datenschlüssel,
Fig. 13 eine Alternative zur Ausführung gemäss Fig. 4 und
Fig. 14 aus Ausführung der Erfindung für einen Datenträger im DVD5-Format.

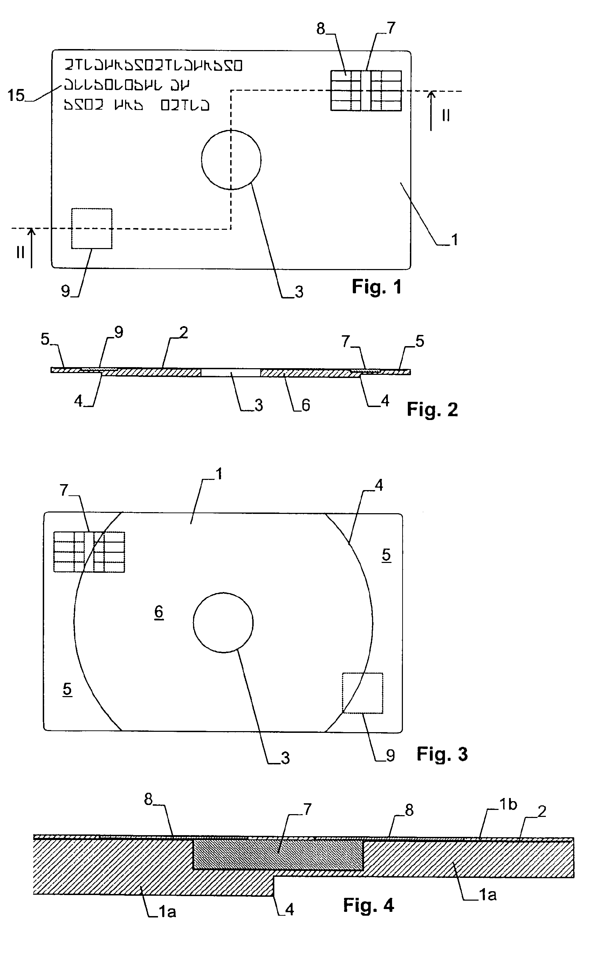

Eine bevorzugte Ausführung des erfindungsgemässen Informationsträgers wird in den Figuren 1 - 3 dargestellt. Er besteht aus einem transparenten, hier im wesentlichen rechteckigen Kunststoffkörper 1, in welchem mindestens eine Metallschicht 2 angeordnet ist, welche Informationen im CD- oder DVD-Format trägt. Im Zentrum des Kunststoffkörpers 1 ist eine Öffnung 3 vorgesehen, welche zur Aufnahme einer Drehachse eines CD- bzw. DVD-Lesegeräts dient. An der Unterseite des Informationsträgers ist eine auf einer Kreislinie angeordnete Stufe 4 vorgesehen, die einen dünneren äusseren Bereich 5 von einem dickeren Mittelbereich 6 trennt. Im Mittelbereich 6 besitzt der Informationsträger die Dicke einer normalen CD bzw. DVD-Disk, so dass die Metallschicht 2 in konventioneller Weise von unten ausgelesen werden kann. Die Stufe 4 dient dazu, den Informationsträger in der Schublade eines CD- bzw. DVD-Lesegeräts zu positionieren. Sie wird in der hier gezeigten Ausführung benötigt, da der Umfang des Informationsträgers nicht jenem einer normalen CD bzw. DVD entspricht.

In einem Eckbereich des Kunststoffkörpers 1 ist ein Halbleiterbaustein 7 angeordnet, wie er z.B. in konventionellen Chipkarten zu finden ist. Je nach Anwendung handelt es sich dabei z.B. um einen passiven, nichtflüchtigen Speicher oder um einen Mikroprozessor mit eigenem Steuerprogramm. Der Halbleiterbaustein 7 ist mit Kontaktflächen 8 verbunden, die an der Oberfläche des Informationsträgers 1 liegen. Sie dienen dazu, den Halbleiterbaustein 7 mit einem externen Lesegerät zu verbinden. Vorzugsweise entsprechen die Kontaktanordnung sowie die elektrischen Eigenschaften des Halbleiterbausteins 7 üblichen Standards, wie sie bei Chipkarten Anwendung finden.

In der Regel ist die Dichte des Halbleiterbausteins 7 höher als jene des Kunststoffkörpers 1, was zu einer asymmetrischen Massenverteilung im Informationsträger führt. Da diese insbesondere in CD- und DVD-Lesegeräten mit hoher Drehzahl zu einer Unwucht führen wurde, ist in der dem Halbleiterbaustein 7 gegenüberliegenden Ecke ein Gegengewicht 9 vorgesehen, welches ebenfalls in den Kunststoffkörper 1 eingelassen ist. Das Gewicht und Volumen des Gegengewichts 9 ist so bemessen, dass die vom Halbleiterbaustein 7 bei einer Drehung um die Öffnung 3 erzeugte Unwucht ausgeglichen wird.

Fig. 4 zeigt einen Detailschnitt durch den Informationsträger im Bereich des Halbleiterbausteins 7. Der Kunststoffkörper besteht aus einem unteren Teil 1a und einem oberen Teil 1b, zwischen denen die Metallschicht 2 angeordnet ist. Der Halbleiterbaustein 7 liegt in einer Vertiefung des unteren Teils la und seine Oberfläche befindet sich etwa auf der Höhe des Metallschicht 2, welche im Bereich des Halbleiterbausteins 7 ausgespart sein kann. Die Kontakte 8 berühren den Halbleiterbaustein 7 von oben.

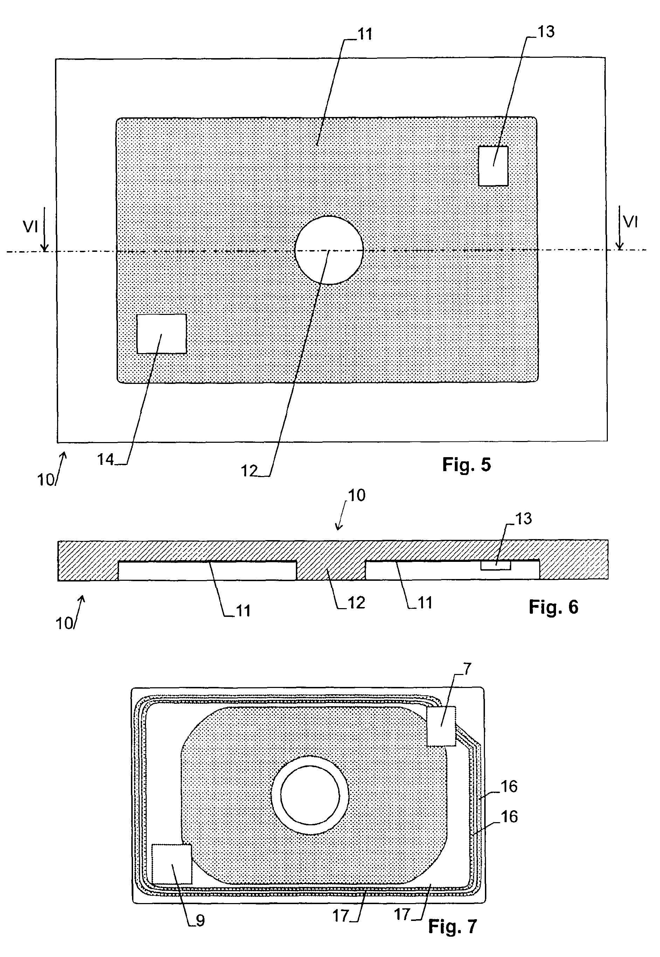

Um den Informationsträger gemäss Fig. 1 - 4 herzustellen, wird zuerst eine Matrixform 10 gefertigt, wie sie in Fig. 5 und 6 dargestellt ist. Die Matrixform 10 besitzt eine Fläche 11, in welcher in Negativform als Relief die Erhöhungen bzw. Vertiefungen angeordnet sind, die später in der Metallschicht 2 auszuformen sind. Ferner besitzt die Matrixform 10 eine zentrale Erhöhung 12 zum Erzeugen der Öffnung 3 sowie zwei kleinere Erhöhungen 13, 14 an den Positionen des Halbleiterbausteins 7 und des Gegengewichts 9.

Im Herstellungsprozess wird die Matrixform 10 gegen eine geeignete Gegenform gedrückt und der Raum zwischen den beiden Formen wird mit einer Kunststoffmasse gefüllt, die aushärtet und den unteren Teil la des Kunststoffkörpers bildet. Die Erhöhungen 13, 14 bilden dabei die Vertiefungen zur positionierten Aufnahme des Halbleiterbausteins 7 und des Gegengewichts 9.

Nach Aushärten des ersten Teils la des Kunststoffkörpers wird dieser aus der Form entfernt und auf seiner Oberseite wird die Metallschicht 2 aufgebracht, z.B. durch Aufsputtern. Sodann werden der Halbleiterbaustein 7 und das Gegengewicht 9 in die Vertiefungen des unteren Teils la des Kunststoffkörpers eingesetzt, wodurch sie automatisch richtig positioniert sind. Nun werden die Kontakte 8 mit dem Halbleiterbaustein 7 verbunden. Schliesslich wird der obere Teil 1b durch Auftragen einer aushärtenden Lackschicht gebildet. In einem letzten Schritt kann die Oberfläche des Informationsträgers mit einer geeigneten Beschriftung 15 (Fig. 1) oder dergleichen versehen werden.

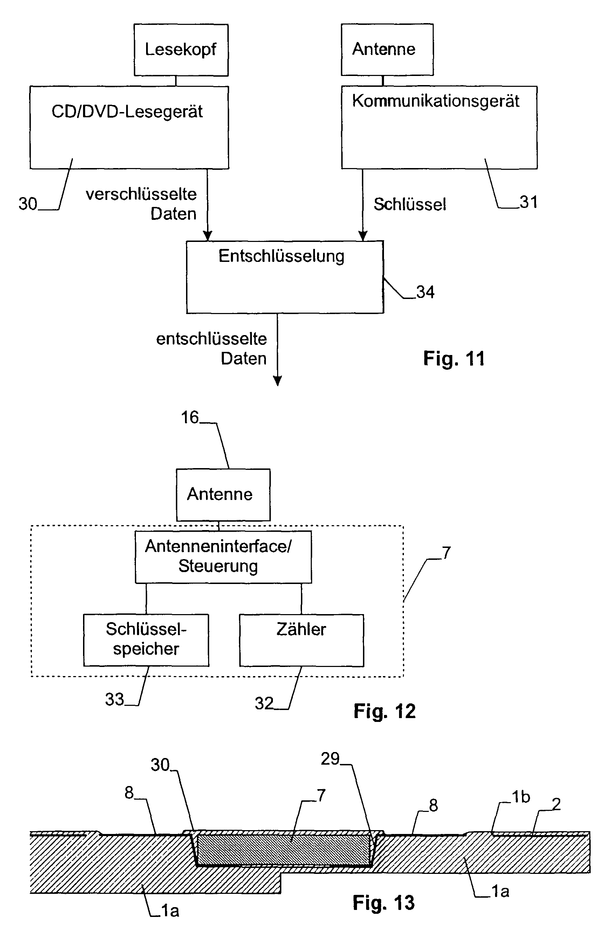

Fig. 13 zeigt eine alternative Ausführung eines Halbleiterbausteins 7 mit Kontakten 8, welche in obigem Verfahren besonders einfach hergestellt werden kann. Hier werden die Kontakte 8 von Strukturen der Metallschicht 2 gebildet. Hierzu wird beim Aufbringen der Metallschicht eine geeignete Maske über den unteren Teil la des Kunststoffkörpers gelegt, so dass die Metallschicht 2 mehrere Flächen bildet, die gegeneinander isoliert sind die sich bis zum Boden der Vertiefung 29 erstrecken, in welche der Halbleiterbaustein 7 zu liegen kommt. Sodann wird der Halbleiterbaustein 7 mit seinen Anschlusspads nach unten in die Vertiefung 9 gelegt, so dass die Anschlusspads automatisch in Kontakt mit den Flächen der Metallschicht 2 kommen. Dann wir der Halbleiterbaustein 7 mit einer Lackschicht 30 abgedeckt.

Wird die Ausführung der Kontaktflächen gemäss Fig. 13 gewählt, so wird die Metallschicht 2 vorzugsweise aus einem korrosionsfesten Metall gefertigt, insbesondere Gold.

In der bisher gezeigten Ausführung des Informationsträgers sind Kontakte 8 vorgesehen, um den Halbleiterbaustein mit einem externen Lesegerät zu verbinden. Alternativ oder zusätzlich hierzu kann auch eine Antenne vorgesehen sein, wie sie als Beispiel in Fig. 7 dargestellt wird.

In der Ausführung nach Fig. 7, in welcher die Metallschicht 2 zur Verdeutlichung als grauer Bereich dargestellt ist, besteht die Antenne aus zwei Bahnen 16, die in der Metallschicht 2 ausgeformt worden sind. Im Gegensatz zu üblichen CDs bzw. DVDs erstreckt sich die Metallschicht 2 also nicht mehr einstückig über die ganze Fläche sondern ist durch isolierende Bereiche 17 unterbrochen, so dass die Bahnen 16 gebildet werden. Diese Bahnen verlaufen im Randbereich des Kunststoffkörpers 1, so dass sie einerseits eine möglichst grosse Fläche umschliessen, andererseits den lesbaren Bereich im CD- bzw. DVD-Format möglichst wenig beeinträchtigen. Die Bahnen 16 münden beim Halbleiterbaustein 7 und sind mit diesem elektrisch verbunden, z.B. in der in Fig. 13 gezeigten Weise.

Der Halbleiterbaustein 7 kann mittels der Antenne berührungslos mit einem externen Gerät in Verbindung treten, wie z.B. einem Gerät zur Fahrscheinkontrolle oder zur Prüfung einer Zutrittsberechtigung.

Die Antenne 16 dient dabei in bekannter Weise zum Datenaustausch, aber auch zur Versorgung des Halbleiterbausteins 7 mit elektrischer Energie.

In der Ausführung nach Fig. 7 wird die Antenne 16 in der Metallschicht 2 ausgeformt. Es ist jedoch auch denkbar, die Antenne 16 an der Oberfläche des Datenträgers auszubilden, z.B. durch Aufbringen leitender Bahnen, insbesondere in einem Druckverfahren. Insbesondere kann hierzu Siebdruck mit einer elektrisch leitenden Farbe eingesetzt werden.

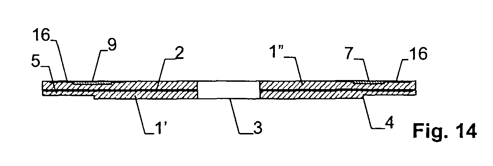

In Fig. 14 wird dargestellt, wie der Halbleiterbaustein 7 und ggf. die Antennenkonfiguration 16 bei Datenträgern im DVD5-Format angeordnet werden können. Bei derartigen Datenträgern besteht der Kunststoffkörper 1 aus zwei Schichten 1', 1", wobei nur in der unteren Schicht 1' eine Metallschicht 2 mit auslesbarer Information vorgesehen ist. Die obere Schicht 1b dient lediglich dazu, die Dicke der Datenträgers zu erhöhen. In einer bevorzugten Ausführung wird der Halbleiterbaustein 7 und, soweit vorgesehen, die Antenntenkonfigruation 16 deshalb in der oberen Schicht 1" angeordnet. In der oberen Schicht 1" steht mehr Platz zur Verfügung, ohne dass die Kapazität des Datenträgers beeinträchtigt wird.

Die Bahnen 16 gemäss Fig. 7 können hergestellt werden, indem beim Aufbringen der Metallschicht 2 eine geeignete Maske zum Abdecken der isolierenden Bereiche 17 verwendet wird. Alternativ dazu können die isolierenden Bereiche nach dem Aufbringen der Metallschicht 2 weggeätzt werden.

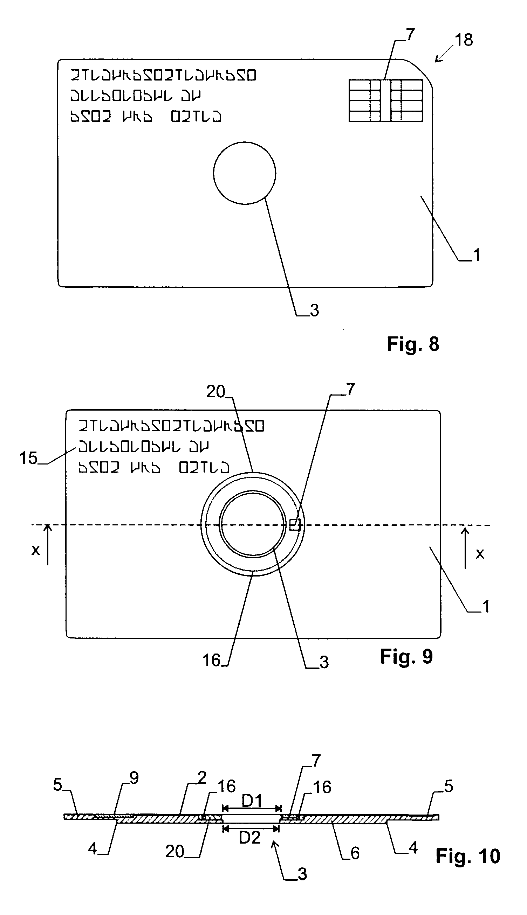

In den Ausführungen gemäss Fig. 1 und 5 ist ein Gegengewicht 9 vorgesehen, um die vom Halbleiterbaustein 7 (und den Kontaktflächen 8) erzeugte Unwucht zu kompensieren. Fig. 8 zeigt eine Ausführung, bei welcher diese Kompensation durch eine asymmetrische Ausgestaltung des Kunststoffkörpers 1 erreicht wird. Hier wurde das Volumen das Kunststoffkörpers 1 auf der Seite des Halbleiterbausteins 7 reduziert, indem die Ecke 18 beim Halbleiterbaustein 7 abgerundet wurde.

In einer anderen Ausführung kann die Öffnung 3 leicht aus der Mitte des Kunststoffkörpers 1 gegen den Halbleiterbaustein versetzt werden, um den gleichen Effekt zu erreichen.

Fig. 9 und 10 zeigen eine weitere Ausführung des Informationsträgers. Hier ist im Kunststoffkörper 1 von der Oberseite her eine Vertiefung ausgespart, in welcher ein ringförmiger Einsatz 20 liegt. Der Einsatz 20 wird vorzugsweise separat gefertigt und enthält den Halbleiterbaustein 7 und eine ringförmige Antenne 16.

Der Innendurchmesser D1 des Einsatzes 20 ist etwas grösser als jener der Öffnung 3, so dass es der Kunststoffkörper 1 ist, der die Position des Informationsträgers auf der Antriebsspindel des Lesegeräts definiert. Dies vermindert die Anforderungen an die Positions- und Grössengenauigkeit des Einsatzes 20.

Die Ausführung gemäss Fig. 9 ist einfach herzustellen, da der Einsatz 20 separat gefertigt und in einem Schritt in den Kunststoffkörper 1 eingebracht werden kann. Um die Ausparung zur Aufnahme des Einsatzes 20 zu erzeugen, wird, ähnlich wie in Fig. 6, in der Matrix 10 eine geeignete Erhöhung vorgesehen.

Dank der Anordnung des Halbleiterbausteins 7 nahe der Drehachse des Informationsträgers ist in der Ausführung gemäss Fig. 9 kein Gegengewicht notwendig.

Die hier gezeigten Ausführungen des Informationsträgers besitzen im wesentlichen das Format einer Kredit- bzw. Visitenkarte. Je nach Anwendung können jedoch auch andere Grössen und Formen verwendet werden. Insbesondere kann der Informationsträger auch normales CD- bzw. DVD-Format besitzen.

Wie bereits erwähnt, kann der Informationsträger z.B. als Fahrschein, Kreditkarte, Ausweis oder Visitenkarte eingesetzt werden, aber auch in konventioneller Weise als Speicher für Film- oder Videodaten und dergleichen. Auf der Metallschicht 2 können dabei z.B. im DVD- oder CD-Format Firmeninformationen, Fahrpläne, Benutzeranleitungen, Anwenderprogramme, Musik, Filme usw. abgespeichert sein, die der Anwender auf seinem Computer, CD- oder Videogerät auslesen kann. Der Halbleiterbaustein 7 dient z.B. zum Prüfen der Karte bei Barrieren, Bankomaten, etc. oder zur Ermitteln einer Zugriffsberechtigung auf die abgespeicherten Daten.

Der Halbleiterbaustein 7 kann das Auslesen der Daten aus der Metallschicht 2 kontrollieren. In einer bevorzugten Ausführung ist zumindest ein Teil der Daten auf der Metallschicht 2 in verschlüsselter Form abgelegt. Der Schlüssel und/oder ein Programm zur Entschlüsselung ist auf dem Halbleiterbaustein 7 abgespeichert.

Fig. 11 zeigt eine mögliche Ausgestaltung eines Geräts zum Auslesen von Informationsträgern mit verschlüsselten Informationen. Es besitzt ein Lesegerät 30 für CDs bzw. DVDs. Zusätzlich weist es ein Kommunikationsgerät 31 auf zur Kommunikation mit dem Halbleiterbaustein 7, vorzugsweise in einer drahtlosen Ausführung mit einer Antenne 16, wie in Fig. 7 und 9 bzw. 10 dargestellt. Ein Blockdiagramm eines entsprechenden Halbleiterbausteins 7 ist in Fig. 12 dargestellt.

Zu Beginn eines Auslesevorgangs wird über das Kommunikationsgerät 31 ein Auslesesignal an den Halbleiterbaustein 7 geschickt. Dieser prüft zuerst einen Zähler 32. Wenn der Wert im Zähler 32 nicht Null ist, so wird er um eins dekrementiert und es wird ein in einem Schlüsselspeicher 33 abgespeicherter Schlüssel ausgegeben. Ist der Wert im Zähler 32 Null, so wird der Schlüssel nicht ausgegeben.

Der Schlüssel wird vom Kommunikationsgerät 31 an eine Entschlüsselungseinheit 34 weitergegeben. Gleichzeitig beginnt das CD/DVD-Lesegerät 30 die Metallschicht 2 auszulesen. Dabei ist mindestens ein Teil der dort vorhandenen Daten verschlüsselt und wird in der Entschlüsselungseinheit 34 mit Hilfe des aus dem Halbleiterbaustein 7 ausgelesenen Schlüssels entschlüsselt.

Der Zähler 32 kann von einem Spezialgerät wieder geladen, d.h. auf einen Wert ungleich Null gesetzt werden.

Das System gemäss Fig. 11 und 12 eignet sich besonders für einen Datenträger, dessen Daten nur gegen einer Gebühr ausgelesen werden dürfen. Die Gebühr wird an einer Verkaufsstelle bezahlt, welche den Zähler 32 auf eine Zahl setzt, die der zugelassenen Zahl von Ausleseoperationen entspricht. Sodann wird bei jedem Lesen der Daten auf der Metallschicht 2 der Zähler 32 dekrementiert, bis die zugelassene Zahl von Ausleseoperationen erreicht ist. Ein derartiges System kann z.B. beim Ausleih von Video- und Tondaten verwendet werden.

Als Verschlüsselung im Sinne der vorliegenden Erfindung werden Massnahmen verstanden, die den Zugriff auf die Daten (oder einen Teil der Daten) auf der Metallschicht 2 erschweren, wie z.B. eine binäre Verschlüsselung aller geschützter Daten, eine Änderung der Reihenfolge geschützter Datenworte, etc.

Es ist auch denkbar, im Halbleiterbaustein 7 lediglich den Zähler 32 vorzusehen, wobei das Lesegerät in diesem Fall so ausgestaltet ist, dass es die geschützten Daten auf der Metallschicht nur dann dem Benutzer zur Verfügung stellt, wenn der Zähler ungleich Null ist, wobei das Lesegerät den Zähler bei jedem Auslesen dekrementiert. Vorzugsweise liegen auch in diesem Fall die geschützten Daten auf der Metallschicht 2 in verschlüsselter Form vor, so dass ein Auslesevorgang in konventionellen Geräten nicht möglich ist. Der Schlüssel zum Entschlüsseln der Daten ist entweder im Lesegerät selbst oder auf der Metallschicht 2 abgespeichert.

Der Halbleiterbaustein 7 kann auch als Kopierschutz dienen, da konventionelle Schreibgeräte für DVDs und CDs lediglich die Daten der Metallschicht 2, nicht aber den Halbleiterbaustein 7 kopieren können.

Generell werden also in dieser Ausführung geschützte Informationen auf der Metallschicht 2 gespeichert. Vor einer Leseoperation wird der Halbleiterbaustein 7 ausgelesen um festzustellen, ob der Leser zum Auslesen der Daten berechtigt ist.

## Patentansprüche

1. Informationsträger mit einem Kunststoffkörper (1) und mindestens einer im Kunststoffkörper angeordneten Metallschicht (2), wobei die Metallschicht (2) in CD- oder DVD-Format kodierte Informationen trägt, dadurch gekennzeichnet, dass im Kunststoffkörper (1) mindestens ein Halbleiterbaustein (7) angeordnet ist und dass der Informationsträger Kommunikationsmittel (8, 16) aufweist, um den Halbleiterbaustein (7) mit einem externen Gerät in Verbindung zu setzen.

2. Informationsträger nach Anspruch 1, dadurch gekennzeichnet, dass er eine Öffnung (3) zur Aufnahme einer Drehachse eines CD- bzw. DVD-Lesegeräts aufweist und dass er weiter Ausgleichsmittel (9, 18) aufweist, um eine durch den Halbleiterbaustein (7) erzeugte Unwucht bezüglich einer Drehung um die Öffnung (3) auszugleichen.

3. Informationsträger nach Anspruch 2, dadurch gekennzeichnet, dass die Ausgleichsmittel (9, 18) mindestens ein dem Halbleiterbaustein (7) gegenüberliegendes Gegengewicht (9) umfassen.

4. Informationsträger nach einem der Ansprüche 2 oder 3, dadurch gekennzeichnet, dass der Kunststoffkörper (1) auf einer dem Halbleiterbaustein (7) gegenüberliegenden Seite schwerer ist als auf der Seite des Halbleiterbausteins (7).

5. Informationsträger nach einem der vorangehenden Ansprüche, dadurch gekennzeichnet, dass er im wesentlichen rechteckig ist und der Halbleiterbaustein (7) in einem Eckbereich angeordnet ist.

6. Informationsträger nach einem der vorangehenden Ansprüche, dadurch gekennzeichnet, dass die Kommunikationsmittel (8, 16) eine im oder am Kunststoffkörper (1) angeordnete Antenne (16) umfassen.

7. Informationsträger nach Anspruch 6, dadurch gekennzeichnet, dass die Antenne (16) durch die Metallschicht (2) gebildet ist.

8. Informationsträger nach Anspruch 7, dadurch gekennzeichnet, dass die Antenne (16) entlang eines Randbereichs des Kunststoffkörpers (1) verläuft.

9. Informationsträger nach Anspruch 6, dadurch gekennzeichnet, dass die Antenne (16) auf einer Oberfläche des Kunststoffkörpers (1) aufgedruckt ist.

10. Informationsträger nach einem der vorangehenden Ansprüche, dadurch gekennzeichnet, dass die Kommunikationsmittel Kontaktflächen (8) an der Aussenseite des Kunststoffkörpers (1) umfassen, welche mit dem Halbleiterbaustein (7) elektrisch verbunden sind.

11. Informationsträger nach Anspruch 10, dadurch gekennzeichnet, dass die Kontaktflächen (8) von der Metallschicht (2) gebildet sind.

12. Informationsträger nach einem der vorangehenden Ansprüche, dadurch gekennzeichnet, dass er im DVD5-Format aufgezeichnete Informationen trägt und zwei Schichten (1', 1") aufweist, wobei die Metallschicht (2) mit den Informationen in einer ersten Schicht (1') des Informationsträgers und der Halbleiterbaustein (7) und/oder die Kommunikationsmittel (8, 16) in einer zweiten Schicht (1") des Informationsträgers angeordnet ist bzw. sind.

13. Informationsträger nach einem der vorangehenden Ansprüche, dadurch gekennzeichnet, dass die Informationen auf der Metallschicht (2) verschlüsselt sind und der Halbleiterbaustein (7) Daten zur Entschlüsselung der Informationen aufweist.

14. Informationsträger nach Anspruch 13, dadurch gekennzeichnet, dass der Halbleiterbaustein einen Schlüsselspeicher (33) für einen Schlüssel zur Entschlüsselung der Informationen aufweist.

15. Informationsträger nach einem der Ansprüche 13 oder 14, dadurch gekennzeichnet, dass der Halbleiterbaustein einen Zählerspeicher (32) aufweist, welcher bei einer Leseoperation dekrementierbar ist.

16. Informationsträger nach einem der vorangehenden Ansprüche, dadurch gekennzeichnet, dass er einen ringförmigen Einsatz (20) aufweist, welcher in den Kunststoffkörper (1) eingelassen ist und den Halbleiterbaustein (7) und insbesondere eine ringförmige Antenne (16) aufnimmt.

17. Informationsträger nach Anspruch 16, dadurch gekennzeichnet, dass er eine Öffnung (3) zur Aufnahme einer Drehachse eines CD- bzw. DVD-Lesegeräts aufweist und dass der ringförmige Einsatz (20) um die Öffnung (3) herum angeordnet ist, wobei ein Innendurchmesser (D2) der Öffnung kleiner ist als ein Innendurchmesser (D1) des Einsatzes (20), derart, dass der Kunststoffkörper (1) den Rand der Öffnung bildet.

18. Verfahren zur Herstellung eines Informationsträgers nach einem der vorangehenden Ansprüche, wobei
ein erster Teil (1a) des Kunststoffkörpers gegen eine Matrixform (10) gegossen wird, wobei die Matrixform die für die Metallschicht (2) bestimmten Informationen als Relief trägt,
die Metallschicht (2) auf die vom Relief der Matrixform geformte Seite aufgebracht wird, und
die Metallschicht (2) von einem zweiten Teil (1b) des Kunststoffkörpers bedeckt wird,
dadurch gekennzeichnet, dass die Matrixform (10) eine Erhöhung (13) aufweist, die eine Vertiefung im ersten Teil (1a) des Kunststoffkörpers erzeugt und dass der Halbleiterbaustein (7) in diese Vertiefung eingebracht wird.

19. Verfahren nach Anspruch 18, dadurch gekennzeichnet, dass beim Aufbringen der Metallschicht (2) Kontaktflächen (8) zur Verbindung des Halbleiterbausteins mit der Aussenwelt erzeugt werden.

20. Verwendung des Informationsträgers nach einem der Ansprüche 1 - 16 zur Speicherung geschützter Informationen, dadurch gekennzeichnet, dass vor dem Auslesen der Halbleiterbaustein (7) ausgelesen wird um eine Zugriffsberechtigung auf die geschützten Informationen zu ermitteln.
